# EUROPÄISCHE PATENTSCHRIFT

(11) **EP 0 910 795 B1**
(45) Veröffentlichungstag und Bekanntmachung des Hinweises auf die Patenterteilung: **03.04.2002**
(21) Anmeldenummer: 97932801.0
(22) Anmeldetag: 10.07.1997
(51) Int. Cl.: G01N 27/333

(54) **SENSOR- UND/ODER TRENNELEMENT SOWIE VERFAHREN ZU DESSEN HERSTELLUNG UND ANWENDUNG DESSELBEN**
SENSOR AND/OR SEPARATION ELEMENT, AND PROCESS FOR THE PRODUCTION AND USE THEREOF
ELEMENT DE DETECTION ET/OU SEPARATION, SON PROCEDE DE PRODUCTION ET SON UTILISATION

(30) Priorität: 11.07.1996 DE 19628052
(43) Veröffentlichungstag der Anmeldung: 28.04.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: HINTSCHE, Rainer, D-13127 Berlin (DE)
(74) Vertreter: Weisert, Annekäte, Dipl.-Ing. Dr.-Ing.
(86) Internationale Anmeldenummer: EP9703666
(87) Internationale Veröffentlichungsnummer: WO9802737

(56) Entgegenhaltungen:
- WO-A-91/04785
- DE-A- 3 841 621
- DE-A- 4 115 414

## Beschreibung

Die Erfindung betrifft ein Sensor- und/oder Trennelement, das eine Membrananordnung umfaßt, die insbesondere zur Stofftrennung und zum Nachweis von Molekülen an sensorischen Elementen als Teil von Trennvorrichtungen für chemische Stoffe oder als Teil von elektrochemischen Meßzellen verwendbar ist und bevorzugt in der chemischen Analytik der Biotechnologie und industriellen Prozeßkontrolle verwendet werden kann.

Außerdem betrifft die Erfindung ein Verfahren zum Herstellen des vorgenannten Sensor- und/oder Trennelements sowie die Anwendung desselben.

Als Teil einer elektrochemischen Meßzelle zur Abtrennung von Gasmolekülen und Nachweis in einem Drei-Elektrodensystem sind aus der DE 3 841 621 C2 Polymermembranen bekannt, die sich auf Stützkörpern mit Kanälen von 50 - 300 µm Länge, welche im Randabstand von < 5 µm vorgesehen sind, befinden, wobei diese Polymermembranen üblicherweise für die semipermeable Sauerstoffdiffusion verwendete Polymermembranen sind. Charakteristisch ist dabei, daß der Stützkörper aus Metallen oder Kunststoffen mit leitfähiger Oberflächenbeschichtung besteht. Charakteristisch für diese Ausführung ist fernerhin ein Elektrolyt, der sich in den Kanalstrukturen befindet und mit der metallisierten oder leitfähigen Oberfläche die Dreiphasengrenze gegen Elektrolytgas ausmacht.

Ähnliche Anordnungen mit metallischem Stützkörper als Elektrode sind in US 3 767 552 beschrieben.

Eine weitere Vorrichtung mit Stützkörpern der genannten Art, die Kapillaren oder kapillarähnliche Durchbrüche ausbilden, sind in der DE 4 018 597 und der US 5 202 011 beschrieben. Charakteristisch für diese bekannten Anordnungen sind massive Stützstrukturen mit relativ langen Kanälen zwischen einer polymeren Deckschicht und weiteren Elementen elektrochemischer Meßzellen. Da solche massiven volumenartigen Stützkörper eine geringe Trennleistung für die Molekültrennung aufweisen, sind bisher keine Anwendungen hierfür beschrieben.

Außerdem ist aus der DE 41 15 414 C2 ein Sensor- und/oder Trennelement für die semipermeable Diffusion von Molekülen bekannt, welches ein mechanisch stabiles Substrat umfaßt, das eine Durchgangsöffnung aufweist, und eine in der Durchgangsöffnung angeordnete semipermeable Membran besitzt. Aus dieser Druckschrift ist des weiteren ein Verfahren zum Herstellen eines Trenn- und/oder Sensorelements bekannt, bei dem in einem Substrat eine Durchgangsöffnung durch ein Bearbeitungsmittel herausgearbeitet wird, eine semipermeable Membran in die Durchgangsöffnung eingebracht wird und mehrere mit der Membrane verbundene elektrische Anschlüsse ausgebildet werden.

Da hier die semipermeable Membrane in den Durchgangsöffnungen ausgebildet wird, indem in dieselben eine Flüssigkeit eingefüllt wird, aus der dann eine ionenselektive Membrane entsteht, erhält man relativ dicke Membranen, welche die Dicke der Durchgangsöffnungen im wesentlichen ausfüllen. Dadurch ist die Diffusionsleistungsfähigkeit sehr beschränkt. Um sie zu verbessern, muß man die Dicke des Substrats und die Querschnittsfläche der Durchgangsöffnungen vermindern. Das mögliche Ausmaß einer solchen Verminderung hängt aber jeweils von den verwendeten Materialien ab, und daher ist eine derartige Verminderung nur sehr begrenzt möglich, weil die Stabilität und Dauerhaftigkeit der semipermeablen Schicht und der Gesamtstruktur durch eine solche Verminderung beeinträchtigt werden.

Schließlich ist aus der WO 91/11710 A1 ein Sensor- und/oder Trennelement für die semipermeable Diffusion von Molekülen bekannt, welches ein mechanisch stabiles Substrat, das eine Durchgangsöffnung aufweist, und eine mit dem Substrat verbundene, perforierte semipermeable Membrane umfaßt. Diese Druckschrift offenbart weiterhin ein Verfahren zum Herstellen eines Sensor- und/oder Trennelements, bei dem eine Durchgangsöffnung aus dem Substrat durch ein Bearbeitungsmittel herausgearbeitet wird, eine semipermeable Membran auf dem Substrat so aufgebracht wird, daß die Durchgangsöffnung überspannt wird, und mehrere elektrische Anschlüsse ausgebildet werden.

Da in diesem bekannten Sensor- und/oder Trennelement die semipermeable Membrane die Durchgangsöffnungen überspannt, muß die Membrane relativ dick sein, wenn sie verhältnismäßig großflächige Durchgangsöffnungen stabil überspannen soll, oder die Querschnittsfläche der Durchgangsöffnungen muß relativ klein sein, wenn die Membrane verhältnismäßig dünn ausgebildet werden soll. In jedem Fall besteht eine gegenseitige Abhängigkeit zwischen der Art des Membranmaterials, der Querschnittsfläche der Durchgangsöffnungen und der kleinstmöglichen Dicke der Membrane, bei der noch eine ausreichende Stabilität und Dauerhaftigkeit der Membrane über den Durchgangsöffnungen vorhanden sind. In der Praxis führen diese Verhältnisse ebenso wie bei dem obigen Sensor- und/oder Trennelement nach der DE 41 15 414 C2 zu einem relativ niedrigen Diffusionsdurchsatz bei verhältnismäßig beschränkter Stabilität und ziemlich begrenzter Dauerhaftigkeit der semipermeablen Schicht.

Aufgabe der vorliegenden Erfindung ist es insbesondere, ein Sensor- und/oder Trennelement der eingangs genannten Art zur Verfügung zu stellen, das bei ausgezeichneter mechanischer Stabilität und Dauerhaftigkeit der semipermeablen Schicht eine wesentlich erhöhte Diffusion der damit zu detektierenden und/oder abzutrennenden Moleküle ermöglicht.

Diese Aufgabe wird erfindungsgemäß gelöst durch ein Sensor- und/oder Trennelement für die semipermeable Diffusion von Molekülen, welches folgendes umfaßt:
(a) ein mechanisch stabiles Substrat, das wenigstens eine Durchgangsöffnung aufweist,
(b) eine mit dem Substrat einstückige perforierte Membrane, die sich über die Durchgangsöffnung erstreckt, wobei das Material der Membrane hinsichtlich seiner Bearbeitbarkeit durch ein vorbestimmtes chemisches und/oder physikalisches Bearbeitungsmittel derart unterschiedlich von dem Material des Substrats ist, daß das Substrat durch das Bearbeitungsmittel entfernbar, dagegen die Membrane durch das Bearbeitungsmittel im wesentlichen unangreifbar ist; und
(c) wenigstens eine semipermeable Schicht, die ein- oder beidseitig auf der Membrane zumindest in deren perforierten Bereich festhaftend angebracht ist, indem die semipermeable Schicht oder die semipermeablen Schichten mechanisch in den angrenzenden Perforationen und/oder durch chemisch-strukturelle und/oder physikalische Adhäsion und/oder adhäsive Zwischenschichten und/oder kovalente Oberflächenanbindung an den angrenzenden Flächen der Membrane, gegebenenfalls des Substrats oder eines auf die Membrane wahlweise zusätzlich ein- oder beidseitig aufgebrachten Metallfilms, befestigt ist bzw. sind.

Auf diese Weise wird mit der Erfindung ein Sensor- und/oder Trennelement zur Verfügung gestellt, das es erlaubt, durch die praktisch beliebige Wahl von Größe und Abstand der Perforationen der Membrane, auf der die semipermeable Schicht angebracht ist, die Durchsetzungen an Molekülen in gewünschter Weise zu variieren und einzustellen.

Ein solches Sensor- und/oder Trennelement ermöglicht es, eine als Stützmembrane für die semipermeable Schicht oder die semipermeablen Schichten dienende Membrane vorzusehen, die eine ultradünne Membrane ist, deren Dicke im Bereich von 50 µm bis 10 nm, besonders bevorzugt im Bereich von 20 µm bis 100 nm, liegt.

Vorzugsweise ist das erfindungsgemäße Sensor- und/oder Trennelement je nach Ausführungsform so ausgebildet, daß
(A) die semipermeable Schicht vorzugsweise aus einem oder mehreren organischen Polymeren besteht, die bzw. das bevorzugt haftfähig oder klebstoffartig ist bzw. sind; und/oder
(B) die Membrane aus mechanisch stabilem membranbildendem anorganischem Material besteht, wobei die Membrane bevorzugt aus Silicium, einer oder mehreren Siliciumverbindungen und/oder einem siliciumhaltigen Material besteht, und zwar besonders bevorzugt aus Siliciumdioxid, Siliciumnitrid, Siliciumoxynitrid, Glas und/oder Quarz, während das Substrat aus einem in das Membranmaterial chemisch umwandelbaren oder mit dem Membranmaterial festhaftend beschichtbaren Material besteht; und/oder
(C) die Perforationen einen Durchmesser oder größten Durchmesser haben, der im Bereich von 0,1 bis 50 µm, vorzugsweise im Bereich von 1 bis 10 µm, liegt; und/oder
(D) sich der wahlweise Metallfilm über einen Bereich des Substrats oder über einen von dem Substrat unterlegten Bereich der Membrane erstreckt; und/oder
(E) auf der Außenseite von einer oder beiden semipermeablen Schichten ein weiterer Metallfilm oder eine oder mehrere weitere Doppelschichten aus Metallfilm plus semipermeabler Schicht aufgebracht sind, wobei gegebenenfalls auf die äußerste semipermeable Schicht ein abschließender Metallfilm aufgebracht ist, und wobei alle weiteren Metallfilme im Bereich der Durchgangsöffnung perforiert sind; und/oder
(F) die Membrane elektrisch nichtleitend oder halbleitend ist und der wahlweise Metallfilm auf der einen oder auf beiden Seiten der Membrane(n) und/oder ein weiterer Metallfilm auf einer oder mehreren semipermeablen Schicht(en) aus einzelnen voreinander gesonderten Segmenten besteht, von denen jedes mit wenigstens einem elektrischen Anschluß versehen ist.

Eine besonders bevorzugte Substrat-Membran-Materialkombination ist eine solche, bei denen beide Materialien Halbleitermaterialien, vorzugsweise auf Silicium basierende Materialien sind, wie beispielsweise Silicium als Substratmaterial und Epi-Silicium als Membranmaterial.

Auf diese Weise wird gemäß der Erfindung eine Anordnung aus einer oder mehreren semipermeablen Schichten, welche die Funktion von Molekül-Trennmembranen haben, einem als Membran ausgebildeten Stützelement (Stützmembran) und gegebenenfalls einem oder mehreren sensorischen Metallfilmen so verbessert, daß die Stützfunktionen nunmehr durch eine mechanisch stabile, mit dem Substrat einstückige Membran, bevorzugt aus anorganischen Bestandteilen, übernommen wird und die semipermeable Schicht festhaftend damit verbunden ist, so daß bei verringerter Tiefenausdehnung eine hochgradig verbesserte Diffusion ermöglicht wird. Der Metallfilm bildet ein metallisches sensorartiges Element, wie es als sensorischer Bestandteil elektrochemischer Meßzellen gebraucht wird, und ist dabei wahlweise an der Innen- und/oder Außenseite der Membrane angebracht.

Bei der Erfindung wird anstelle der bisher üblichen volumenartigen Gitter-, Kapillar- oder Siebkonstruktionen eine bevorzugt ultradünne, mechanische Membrane verwendet. Dabei kann ein in der Siliciumtechnologie und der Mikromechanik üblicher technologischer Prozeß angewandt werden, mit dem beispielsweise durch Ätzen von Silicium, Gläsern o.dgl. als Durchgangsöffnung Gruben, Löcher o.dgl in Silicium, Glas und anderen Materialien erzeugt werden können, wobei am Ende einer solchen Durchgangsöffnung als Membrane eine ultradünne Schicht aus membranbildenden organischen Materialien, wie Siliciumdioxid, Silciumnitrid, Siliciumoxynitrid oder Epi-Silicium stehen bleibt, ihr Material also so gewählt ist, daß sie von dem Ätzmittel o.dgl. des Substrats nicht angegriffen wird. Die Dicke solcher Membranen wird durch die vorangegangene Aufbringung der Materialien auf das Substrat, das z.B. aus Silicium, Glas o.dgl. besteht, bestimmt und eingestellt.

In diese Membran lassen sich beispielsweise durch einen photolithographischen Prozeß mit Hilfe von naßchemischen oder Trokkenätzprozessen beliebig große Poren und Öffnungen als Perforationen in die Membrane einbringen, so daß durch Größe und Anzahl dieser Öffnungen eine einstellbare Durchlässigkeit erreicht wird.

Diese Perforationen bzw. deren Durchlässigkeit ist von besonderem Vorteil für die Einstellung der Diffusion oder Penetration von Molekülen oder Atomen durch die stützende Membrane.

Zur Anbringung eines sensorischen Elements, wie einer Elektrode oder zur Veränderung der chemischen Oberflächenstruktur, werden, bevorzugt ultradünne, Metallfilme, beispielsweise nach dem bekannten technologischen Prinzip des Sputterns oder thermischen Aufdampfens auf die Oberseite der Stützmembran oder auf deren Rückseite an den grubenartigen Durchgangsöffnungen aufgebracht. Diese Metallfilme können auf der Außen- oder Innenseite mit einer elektrischen Verbindungsleitung versehen sein, um sie z.B. als elektrochemisch arbeitende Elektroden zu benutzen. Die Metallfilme lassen sich infolge der bevorzugt planaren Anordnung einfach, z.B. durch Maskentechnik, strukturieren und dann als Multikanalelektroden verwenden.

Besonders vorteilhaft wirken sich die mechanische Strukturierung der die semipermeable(n) Schicht(en) stützenden Membrane mit Perforationen dahingehend aus, daß sie als mechanische Verankerung für die semipermeablen, bevorzugt aus Kunststoff hergestellte(n) Schicht(en) wirken, die wahlweise auf eine oder beide Seiten der Membrane aufgebracht ist bzw. sind. Zur Verstärkung der Adhäsion können bekannte Oberflächenmodifikationen wie Silanisierung oder chemische Bindungen mit bifunktionellen Reagenzien nach Funktionalisierung der Oberfläche vorgesehen werden.

Die Anordnungen von semipermeablen Schichten, wie von Polymermembranen, auf ultradünnen Stützmembranen hat den Vorteil, daß sie für hohe Diffusionsraten von Molekülen, wie z.B. von solchen wie Gasen, ausgelegt werden können und aus diesem Grund auch Trennfunktionen, z.B. bei Gasen, erfüllen können.

Die Metallfilme können als elektrochemisches Sensorelement im Zusammenwirken mit den semipermeablen Schichten, wie beispielsweise Polymermembranen, verwendet und z.B. als Elektroden in elektrochemischen Zellen eingesetzt werden, wobei auf einer Seite des Sensor- und/oder Trennelements die üblichen Elektrolyte und zusätzlichen Elektroden verwendet werden können.

Außerdem wird mit der Erfindung ein Verfahren zum Herstellen des erfindungsgemäßen Sensor- und/oder Trennelements zur Verfügung gestellt, das keineswegs auf die vorstehend nur beispielsweise genannten, besonders bevorzugten, Ausführungsformen von bestimmten Verfahrensschritten beschränkt ist, sondern vielmehr generell die folgenden detaillierten Verfahrensschritte umfaßt:
(a) Vorsehen einer elektrisch isolierenden oder halbleitenden Membrane auf einem mechanisch stabilen Substrat derart, daß die Membrane mit dem Substrat einstückig ist, wobei das Material der Membrane hinsichtlich seiner Bearbeitbarkeit durch ein vorbestimmtes chemisches und/oder physikalisches Bearbeitungsmittel derart unterschiedlich von dem Material des Substrats ist, daß das Substrat durch dieses Bearbeitungsmittel entfernbar, dagegen die Membrane durch dasselbe Bearbeitungsmittel im wesentlichen unangreifbar ist;
(b) Herausarbeiten von wenigstens einer Durchgangsöffnung aus dem Substrat durch das Bearbeitungsmittel, so daß die Durchgangsöffnung einseitig von der Membrane verschlossen ist;
(c) Ausbilden von Perforationen in dem Bereich der Membrane, der sich über die Durchgangsöffnung erstreckt;
(d) festhaftendes Aufbringen von wenigstens einer semipermeablen Schicht ein- oder beidseitig zumindest auf dem die Durchgangsöffnung überspannenden Bereich der Membrane, vorzugsweise auch auf den angrenzenden Bereich des Substrats, indem die semipermeable Schicht oder die semipermeablen Schichten mechanisch in den angrenzenden Perforationen und/oder durch chemisch-strukturelle und/oder physikalische Adhäsion und/oder adhäsive Zwischenschichten und/oder kovalente Oberflächenanbindung an den angrenzenden Flächen der Membrane und gegebenenfalls des Substrats oder eines auf die Membrane wahlweise zusätzlich ein- oder beidseitig aufgebrachten Metallfilms befestigt wird bzw. werden.

Wenn, was im Rahmen der Erfindung möglich ist, statt einer elektrisch isolierenden oder halbleitenden Membrane eine elektrisch leitfähige Membrane verwendet wird, kann das erfindungsgemäße Verfahren auch in der obigen Weise ausgeführt werden, wobei die elektrisch leitfähige Membrane als Metallfilm benutzt werden kann, der mit einem oder mehreren elektrisch leitfähigen Anschlüssen versehen werden kann.

Gemäß einer Weiterbildung des erfindungsgemäßen Verfahrens können Sensor- und/oder Trennelemente von ausgeklügelten Strukturen hergestellt werden, indem auf der Außenseite von einer oder beiden semipermeablen Schichten ein weiterer Metallfilm oder ein oder mehrere Doppelschichten aus Metallfilm plus semipermeabler Membran aufgebracht werden, wobei gegebenenfalls auf die äußerste semipermeable Membran ein abschließender Metallfilm aufgebracht wird, und wobei alle weiteren Metallfilme im Bereich der Durchgangsöffnung perforiert werden, und wobei der weitere Metallfilm oder einer oder mehrere oder alle der weiteren Metallfilme in der nachstehend angegebenen segmentierten Weise ausgebildet sein kann bzw. können.

Weiterhin zeichnen sich bevorzugte Ausführungsformen des Verfahrens nach der Erfindung dadurch aus, daß
(1) ein Metallfilm oder mehrere Metallfilme aus voneinander separaten Segmenten hergestellt wird bzw. werden, wobei vorzugsweise jedes Segment mit wenigstens einem eigenen Anschluß versehen oder elektrisch leitend verbunden wird; und/oder
(2) die Perforationen mit einem Durchmesser oder größten Durchmesser im Bereich von 0,1 bis 50 µm, vorzugsweise im Bereich von 1 bis 10 µm, hergestellt werden; und/oder
(3) die semipermeable(n) Schicht(en) durch ein Spin-off-Verfahren, eine Schleuder- oder Wirbelbeschichtung, oder eine Spin- oder Düsenbeschichtung aufgebracht wird bzw. werden; und/oder
(4) als Mittel zum Herausarbeiten der Durchgangsöffnung (en) chemisches Naßätzen, Plasmatrockenätzen, Elektroerosion oder thermisches Ausschmelzen angewandt wird; und/oder
(5) alle oder ein Teil der Perforationen mittels Photolithographie in Verbindung mit Trocken- oder Naßätzen oder mittels Laserstrahlbearbeitung ausgebildet werden; und/oder
(6) der Metallfilm oder alle Metallfilme oder ein Teil der Metallfilme durch Sputtern, Bedampfen, Plattieren, Galvanisieren oder elektroloses Galvanisieren aufgebracht wird bzw. werden.

Noch weitere bevorzugte Merkmale der Erfindung sind in den Patentansprüchen angegeben.

Das erfindungsgemäße und/oder nach dem Verfahren gemäß der Erfindung hergestellte Sensor- und/oder Trennelement ist insbesondere zur Detektion von elektrochemisch aktiven Molekülen sowie zur Trennung von Molekülen durch die semipermeable(n) Schicht(en) anwendbar.

Der Vorteil der Erfindung liegt insbesondere darin, daß durch die, bevorzugt ultradünne, Membran verbesserte Stofftransporteigenschaften ebenso wie eine verbesserte Verankerung der semipermeablen Schicht(en), z.B. in Form von Polymermembranen, an der stützenden Membran erreicht werden. Ein weiterer Vorteil liegt in der bevorzugten sehr preiswerten Herstellung mit üblichen halbleitertechnologischen Verfahren und in der auf sehr einfache Weise variablen Anordnung und Dimensionierung der Perforationen in der Membran (Stützmembran). Verglichen mit den bisher üblichen Verfahren der LIGA-Technik oder dem Bulk-Micromachining mit volumenartigen Stützelementen ergeben sich außerordentliche ökonomische und Handhabungsvorteile.

Die vorstehenden sowie weitere Vorteile und Merkmale der Erfindung seien nachfolgend anhand von einigen besonders bevorzugten Ausführungsformen des erfindungsgemäßen Sensor- und/oder Trennelements unter Bezugnahme auf die Zeichnung erläutert; es zeigen:
- Fig. 1: eine perspektivische Ansicht einer ersten Ausführungsform eines Sensor- und/oder Trennelements nach der Erfindung;
- Fig. 2: einen Schnitt längs der Linie X-X' durch das Sensor- und/oder Trennelement der Fig. 1; und
- Fig. 3: einen der Fig. 2 entsprechenden Schnitt durch eine zweite Ausführungsform eines erfindungsgemäßen Sensor- und/oder Trennelements.

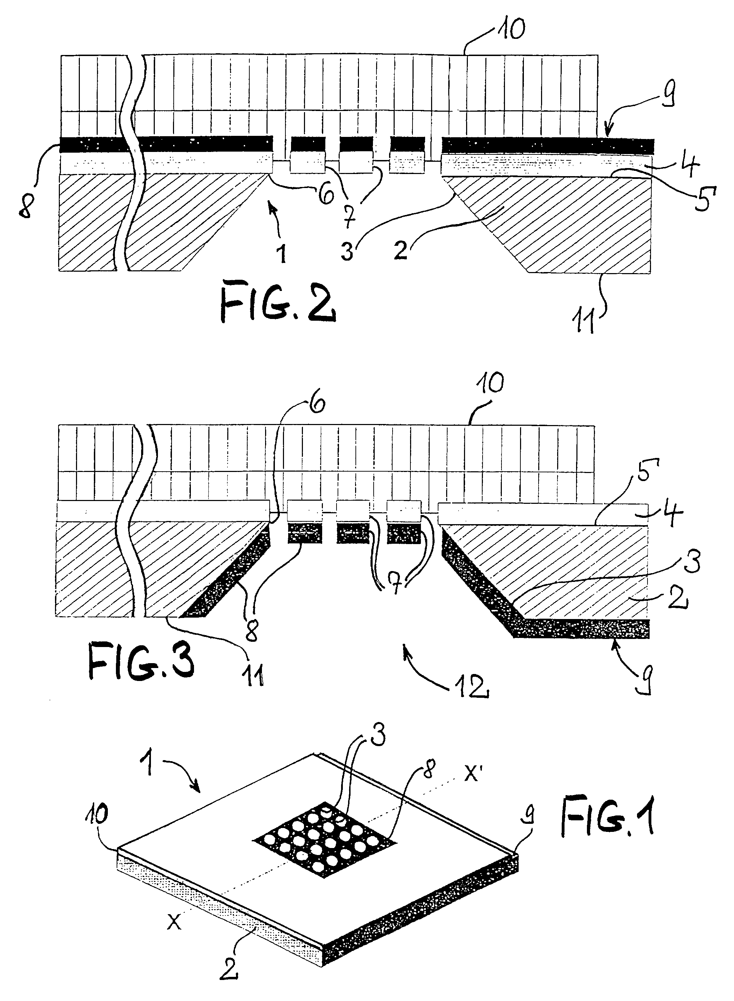

Es sei zunächst auf die Fig. 1 und 2 Bezug genommen, wonach das dort insgesamt mit 1 bezeichnete Sensor- und/oder Trennelement, das für die semipermeable Diffusion von Molekülen geeignet ist, folgendes umfaßt:
(1) Ein mechanisch stabiles Substrat 2, das vorliegend aus einem Silicium-Wafer besteht, und mit Durchgangsöffnungen 3 versehen ist, die beim Herausätzen derselben konisch oder allgemeiner "grubenförmig" sind, wobei im vorliegenden Beispielsfall, wie die Fig. 1 zeigt, 20 solcher Durchgangsöffnungen 3 in regelmäßiger Anordnung ausgebildet sind.
(2) Eine mit dem Substrat einstückige Membrane 4, die im vorliegenden Beispielsfall aus Epi-Silicium besteht und eine Dicke im Bereich von 100 nm bis 50 µm hat. Diese Membrane 4 erstreckt sich über die Durchgangsöffnung 3 und vorliegend die gesamte Oberseite 5 des Substrats 2, wobei es jedoch auch möglich ist, daß sich die Membrane nur über den dem Rand 6 benachbarten Bereich der Durchgangsöffnung 5 erstreckt, beispielsweise, jedoch nicht notwendigerweise, dann, wenn nur eine einzige Durchgangsöffnung vorgesehen ist. Wichtig ist es, daß die Membrane 4 einstückig mit dem Substrat ist, so daß sie festhaftend von dem Substrat abgestützt und gehalten ist. Die Membrane 4 ist in dem an dieselbe angrenzenden Bereich der Durchgangsöffnung 3 mit Perforationen 7 versehen, die vorliegend kreisförmig sind und einen Durchmesser im Bereich von 1 bis 10 µm haben und die in Fig. 1 nicht dargestellt sind. Es ist in diesem Zusammenhang zu beachten, daß die Figuren der Zeichnung nicht notwendigerweise maßstabsgerecht sind, sondern vielmehr der Schwerpunkt auf die Veranschaulichung der Prinzipien der vorliegenden Erfindung gelegt worden ist.
(3) Einen Metallfilm 8, der auf der Oberseite, d.h. auf der dem Substrat 2 abgewandten Seite, der Membrane 4 vorgesehen ist und dessen Dicke vorliegend im Bereich von 0,1 bis 50 µm liegt. Dieser Metallfilm 8 ist mit einem elektrischen Anschluß 9, vorliegend in der Form einer von außen frei zugänglichen Anschlußfläche, versehen.
(4) Eine semipermeable Schicht 10, die auf dem Metallfilm aufgebracht ist und sich, wie die Fig. 2 veranschaulicht, teilweise in die durch die Membrane 4 und den Metallfilm 8 verlaufenden Perforationen 7 hinein erstreckt, so daß eine gute festhaftende Verankerung der semipermeablen Schicht 10, die bevorzugt aus Polymermaterial besteht, an der übrigen Struktur des Sensor- und/oder Trennelements 1 gewährleistet ist. Diese semipermeable Schicht 10 bildet eine Trennmembrane für die Diffusionstrennung von Molekülen.

Die Ausführungsform gemäß der Fig. 3 unterscheidet sich von derjenigen nach den Fig. 1 und 2 darin, daß der Metallfilm 8 auf der dem Substrat 2 zugewandten Seite der Membrane 4 und auf der Wandfläche der Durchgangsöffnungen 3 sowie der freiliegenden Unterseite 11 des Substrats aufgebracht ist. Infolgedessen sind in Fig. 3 die gleichen Bezugszeichen wie in den Fig. 1 und 2 mit Ausnahme des Bezugszeichens 12, welches das gesamte Sensor- und/oder Trennelement bezeichnet, verwendet worden.

Eine bevorzugte Ausführungsform des Verfahrens zum Herstellen des Sensor- und/oder Trennelements 1 gemäß den Fig. 1 und 2 umfaßt insbesondere die folgenden Verfahrensschritte:
(a) Vorsehen einer dünnen, vorzugsweise ultradünnen, Membrane 4 auf dem massiven, d.h. noch nicht mit den Durchgangsöffnungen 3 versehenen, Substrat 2, derart, daß die Membrane 4 mit dem Substrat 2 einstückig ist, wobei das Material des Substrats 2 vorliegend Silicium ist, während das Material der Membrane 4 Epi-Silicium ist, so daß infolgedessen die beiden Materialien chemisch unterschiedliche Ätzbarkeit besitzen (welche Materialkombination nur ein Beispiel von einer Vielzahl von auf Silicium basierenden Materialien aus der Halbleitertechnik ist).
(b) Chemisches Naßätzen des Substrats 2 unter Anwendung einer auf die Unterseite 11 des Substrats 2 aufgebrachten lithographischen Maske, so daß das Silicium des als Substrat 2 vorgesehenen Silicium-Wafers im Bereich der Durchgangsöffnung 3 entfernt wird, während das Material der Membrane 4 durch die für das chemische Naßätzen des Siliciums verwendete Ätzflüssigkeit im wesentlichen nicht angegriffen wird und stehenbleibt, so daß die Membrane 4 in diesem Verfahrensstadium die Durchgangsöffnung 3 einseitig verschließt.
(c) Ausbilden der Perforationen 7 in der Membrane 4, indem durch einen photolithographischen Prozeß die Membrane 4 außerhalb der vorgesehenen Bereiche der Perforationen 7 abgedeckt wird und die Perforationen 7 mittels eines Plasmatrockenätzprozesses durch die Membrane hindurchgeätzt werden, so daß durch die Perforationen 7 eine netzähnliche Struktur mit Öffnungen, nämlich den Perforationen, entsteht.
(d) Aufbringen des Metallfilms 8, beispielsweise durch Sputtern oder Bedampfen der dem Substrat 2 abgewandten Seite der Membrane 4.
(e) Festhaltendes Aufbringen der semipermeablen Schicht 10, vorliegend aus Polymermaterial, zum Beispiel durch einen Schleuderprozeß mittels eines Spin-off-Verfahrens auf die freiliegende Seite des Metallfilms 8.
(f) Ausbilden eines elektrischen Anschlusses 9 durch Entfernen des Materials der semipermeablen Schicht 10 in einem geeigneten Bereich, vorliegend im Randbereich, so daß der Metallfilm 8 durch geeignete, hier nicht dargestellte, Kontaktierungsmittel mit einer elektrischen Leitung verbunden werden kann.

Das Verfahren zum Herstellen des Sensor- und/oder Trennelements 12 gemäß der Fig. 3 unterscheidet sich von dem vorstehenden Verfahren (d) lediglich darin, daß der Metallfilm 8 auf die mit den Perforationen 7 versehene Membrane 4 im Verfahrensschritt (d) von der freiliegenden Seite der Durchgangsöffnung 3 her aufgebracht wird, so daß gleichzeitig die Wand der Durchgangsöffnung und zumindest ein Teil der angrenzenden Unterseite 11 des Substrats 2 mit dem Metallfilm 8 versehen und so auch der elektrische Anschluß 9 ausgebildet wird. Bei dieser Verfahrensweise wird die semipermeable Schicht 10 direkt auf die Membrane 4 aufgebracht.

Insbesondere umfaßt die Erfindung folgende Strukturen eines Sensor- und/oder Trennelements als Anordnung von semipermeablen Schichten (Sensormembranen) zur Diffusion von Molekülen (womit auch Atome erfaßt sein sollen), insbesondere an sensorische Elemente (Metallfilme):
(i) Eine Anordnung, bei der auf einer ultradünnen perforierten mechanischen Stützmembran ein Metallfilm als sensorisches Element und eine semipermeable, vorzugsweise polymere, Trennschicht angeordnet sind.
(ii) Eine Anordnung, bei der die Stützmembran aus mechanisch stabilen membranbildenden anorganischen Materialien wie SiO₂, SiNₓ, Epi-Silicium oder anderen besteht und deren Dicke besonders bevorzugt zwischen 100 nm und 20 µm liegt, die aber auch dünner und dicker sein kann.
(iii) Eine Anordnung, bei der die Stützmembran mit Perforationen versehen ist, deren Größe besonders bevorzugt ca. 1 - 10 µm beträgt und deren geometrische Form sowie Verteilung variabel wählbar ist und der Kombination und den Eigenschaften zusätzlicher Schichten angepaßt sein kann.
(iv) Eine Anordnung, bei der die Stützmembran den Boden von einer oder mehreren Gruben in einem mechanisch stabilen Material wie z.B. Silicium oder Glas bildet.
(v) Eine Anordnung, bei der wenigstens ein leitender Metallfilm, vorzugsweise aus Edelmetallen, als sensitives Element nach dem Elektrodenprinzip auf beiden Seiten oder wahlweise einer Seite der Stützmembran aufgebracht ist und jeweils eine elektrische Ableitung aufweist, aber auch aus strukturierten Segmenten mit mehreren Ableitungen bestehen kann.
(vi) Eine Anordnung, bei welcher auf der Stützmembran mit oder ohne Metallfilm eine semipermeable, bevorzugt organische, Polymermembran, die vorzugsweise eine haftfähige Polymermembrane ist, aufgebracht ist, die durch chemische Adhäsion und/oder kovalente Oberflächenanbindung und/oder mechanische Verankerung in den Öffnungen der Stützmembran, stabil befestigt ist.
(vii) Eine Anordnung, die vorteilhaft zur Erfassung von elektrochemisch aktiven Molekülen als Teil einer elektrochemischen Zelle anwendbar ist.
(viii) Eine Anordnung, die äußerst günstig zur semipermeablen Abtrennung von Molekülen und zum Transport in den hinter der semipermeablen Schicht oder den semipermeablen Schichten befindlichen Raum verwendbar ist.

## Patentansprüche

1. Sensor- und/oder Trennelement für die semipermeable Diffusion von Molekülen, umfassend
(a) ein mechanisch stabiles Substrat (2), das wenigstens eine Durchgangsöffnung (3) aufweist;
(b) eine mit dem Substrat (2) einstückige perforierte Membrane (4), die sich über die Durchgangsöffnung (3) erstreckt, wobei das Material der Membrane (4) hinsichtlich seiner Bearbeitbarkeit durch ein vorbestimmtes chemisches und/oder physikalisches Bearbeitungsmittel derart unterschiedlich von dem Material des Substrats (2) ist, daß das Substrat (2) durch das Bearbeitungsmittel entfernbar, dagegen die Membrane (4) durch das Bearbeitungsmittel im wesentlichen unangreifbar ist; und
(c) wenigstens eine semipermeable Schicht (10), die ein- oder beidseitig auf der Membrane (4) zumindest in deren perforiertem Bereich festhaftend angebracht ist, indem die semipermeable Schicht (10) oder die semipermeablen Schichten mechanisch in den angrenzenden Perforationen (7) und/oder durch chemisch-strukturelle und/oder physikalische Adhäsion und/oder adhäsive Zwischenschichten und/oder kovalente Oberflächenanbindung an den angrenzenden Flächen der Membrane (4), gegebenenfalls des Substrats (2) oder eines auf die Membrane (4) wahlweise zusätzlich ein- oder beidseitig aufgebrachten Metallfilms (8), befestigt ist bzw. sind.

2. Sensor- und/oder Trennelement nach Anspruch 1, **dadurch gekennzeichnet, daß** die Membrane (4) eine ultradünne Membrane (4) ist, deren Dicke im Bereich von 20 µm bis 100 nm liegt.

3. Sensor- und/oder Trennelement nach Anspruch 1 oder 2, **dadurch gekennzeichnet, daß** die semipermeable Schicht (10) eine Polymerschicht, vorzugsweise aus einem organischen, bevorzugt haftfähigem, Polymer ist.

4. Sensor- und/oder Trennelement nach Anspruch 1, 2 oder 3, **dadurch gekennzeichnet, daß** die Membrane (4) aus mechanisch stabilem membranbildendem anorganischem Material besteht.

5. Sensor- und/oder Trennelement nach Anspruch 4, **dadurch gekennzeichnet, daß** die Membrane (4) aus Silicium, einer oder mehreren Siliciumverbindungen und/oder einem siliciumhaltigen Material besteht.

6. Sensor- und/oder Trennelement nach einem der vorhergehenden Ansprüche, **dadurch gekennzeichnet, daß** die Perforationen (7) einen Durchmesser oder größten Durchmesser haben, der im Bereich von 0,1 bis 50 µm, vorzugsweise im Bereich von 1 bis 10 µm, liegt.

7. Sensor- und/oder Trennelement nach einem der vorhergehenden Ansprüche, **dadurch gekennzeichnet, daß** sich der wahlweise Metallfilm (8) über einen Bereich des Substrats (2) oder über einen von dem Substrat (2) unterlegten Bereich der Membrane (4) erstreckt.

8. Sensor- und/oder Trennelement nach einem der vorhergehenden Ansprüche, **dadurch gekennzeichnet, daß** ein Metallfilm (8) oder mehrere Metallfilme vorgesehen ist bzw. sind, der bzw. die aus einzelnen voneinander gesonderten Segmenten besteht bzw. bestehen, von denen jedes mit wenigstens einem elektrischen Anschluß (9) versehen ist.

9. Sensor- und/oder Trennelement nach einem der vorhergehenden Ansprüche, **dadurch gekennzeichnet, daß** auf der Außenseite von einer oder beiden semipermeablen Schichten (10) ein weiterer Metallfilm oder eine oder mehrere weitere Doppelschichten aus Metallfilm plus semipermeabler Schicht aufgebracht sind, wobei gegebenenfalls auf die äußerste semipermeable Schicht ein abschließender Metallfilm aufgebracht ist, und wobei alle weiteren Metallfilme im Bereich der Durchgangsöffnung perforiert sind.

10. Verfahren zum Herstellen eines Sensor- und/oder Trennelements für die semipermeable Diffusion von Molekülen, umfassend die folgenden Verfahrensschritte:
(a) Vorsehen einer elektrisch leitfähigen Membrane (4) auf einem mechanisch stabilen Substrat (2) derart, daß die Membrane (4) mit dem Substrat (2) einstückig ist, wobei das Material der Membrane (4) hinsichtlich seiner Bearbeitbarkeit durch ein vorbestimmtes chemisches und/oder physikalisches Bearbeitungsmittel derart unterschiedlich von dem Material des Substrats (2) ist, daß das Substrat (2) durch das Bearbeitungsmittel entfernbar, dagegen die Membrane (4) durch das Bearbeitungsmittel im wesentlichen unangreifbar ist;
(b) Herausarbeiten von wenigstens einer Durchgangsöffnung (3) aus dem Substrat (2) durch das Bearbeitungsmittel, so daß die Durchgangsöffnung (3) einseitig von der Membrane (4) verschlossen ist;
(c) Ausbilden von Perforationen (7) in dem Bereich der Membrane (4), der sich über die Durchgangsöffnung (3) erstreckt;
(d) festhaftendes Aufbringen von wenigstens einer semipermeablen Schicht (10) ein- oder beidseitig zumindest auf den die Durchgangsöffnung (3) überspannenden Bereich der Membrane (4), vorzugsweise auch auf den angrenzenden Bereich des Substrats (2), indem die semipermeable Schicht (10) oder die semipermeablen Schichten mechanisch in den angrenzenden Perforationen (7) und/oder durch chemisch-strukturelle und/oder physikalische Adhäsion und/oder adhäsive Zwischenschichten und/oder kovalente Oberflächenanbindung an den angrenzenden Flächen der Membrane (4) und gegebenenfalls des Substrats (2) befestigt wird bzw. werden;
(e) Ausbilden von einem oder mehreren mit der Membrane (4) verbundenen oder von dieser gebildeten elektrischen Anschlüssen (9).

11. Verfahren zum Herstellen eines Sensor- und/oder Trennelements für die semipermeable Diffusion von Molekülen, umfassend die folgenden Verfahrensschritte:
(a) Vorsehen einer elektrisch isolierenden oder halbleitenden Membrane (4) auf einem mechanisch stabilen Substrat (2) derart, daß die Membrane (4) mit dem Substrat (2) einstückig ist, wobei das Material der Membrane (4) hinsichtlich seiner Bearbeitbarkeit durch ein vorbestimmtes chemisches und/oder physikalisches Bearbeitungsmittel derart unterschiedlich von dem Material des Substrats (2) ist, daß das Substrat (2) durch dieses Bearbeitungsmittel entfernbar, dagegen die Membrane (4) durch dasselbe Bearbeitungsmittel im wesentlichen unangreifbar ist;
(b) Herausarbeiten von wenigstens einer Durchgangsöffnung (3) aus dem Substrat (2) durch das Bearbeitungsmittel, so daß die Durchgangsöffnung (3) einseitig von der Membrane (4) verschlossen ist;
(c) Ausbilden von Perforationen (7) in dem Bereich der Membrane (4), der sich über die Durchgangsöffnung (3) erstreckt;
(d) festhaftendes Aufbringen von wenigstens einer semipermeablen Schicht (10) ein- oder beidseitig zumindest auf dem die Durchgangsöffnung (3) überspannenden Bereich der Membrane (4), vorzugsweise auch auf den angrenzenden Bereich des Substrats (2), indem die semipermeable Schicht (10) oder die semipermeablen Schichten mechanisch in den angrenzenden Perforationen (7) und/oder durch chemisch-strukturelle und/oder physikalische Adhäsion und/oder adhäsive Zwischenschichten und/oder kovalente Oberflächenanbindung an den angrenzenden Flächen der Membrane (4) und gegebenenfalls des Substrats (2) oder eines auf die Membrane (4) wahlweise zusätzlich ein- oder beidseitig aufgebrachten Metallfilms (8) befestigt wird bzw. werden.

12. Verfahren nach Anspruch 11, **dadurch gekennzeichnet, daß** einer oder mehrere elektrische Anschlüsse (9), verbunden mit dem jeweiligen Metallfilm (8), hergestellt wird bzw. werden.

13. Verfahren nach Anspruch 10, 11 oder 12, **dadurch gekennzeichnet, daß** die Membrane (4) aus mechanisch stabilem membranbildendem anorganischem Material hergestellt wird.

14. Verfahren nach einem der vorhergehenden Verfahrensansprüche, **dadurch gekennzeichnet, daß** die Membrane (4) aus Silicium, einer oder mehreren Siliciumverbindungen und/oder einem siliciumhaltigen Material hergestellt wird.

15. Verfahren nach einem der Ansprüche 10 bis 14, **dadurch gekennzeichnet, daß** auf der Außenseite von einer oder beiden semipermeablen Schichten (10) ein weiterer Metallfilm oder ein oder mehrere Doppelschichten aus Metallfilm plus semipermeabler Membran aufgebracht werden, wobei gegebenenfalls auf die äußerste semipermeable Membran ein abschließender Metallfilm aufgebracht wird, und wobei alle weiteren Metallfilme im Bereich der Durchgangsöffnung (3) perforiert werden.

16. Verfahren nach einem der vorhergehenden Verfahrensansprüche, **dadurch gekennzeichnet, daß** ein oder mehrere Metallfilme (8) aus voneinander separaten Segmenten hergestellt werden, wobei vorzugsweise jedes Segment mit wenigstens einem eigenen Anschluß (9) versehen oder elektrisch leitend verbunden wird.

17. Verfahren nach einem der Ansprüche 10 bis 16, **dadurch gekennzeichnet, daß** wenigstens eine semipermeable Schicht (10), vorzugsweise alle semipermeablen Schichten, aus Polymer, vorzugsweise organischem, bevorzugt haftfähigem, Polymer, ausgebildet wird bzw. werden.

18. Verfahren nach einem der Ansprüche 10 bis 17, **dadurch gekennzeichnet, daß** die Perforationen (7) mit einem Durchmesser oder größten Durchmesser im Bereich von 0,1 bis 50 µm, vorzugsweise im Bereich von 1 bis 10 µm, hergestellt werden.

19. Verfahren nach einem der Ansprüche 10 bis 18, **dadurch gekennzeichnet, daß** die semipermeable(n) Schicht(en) (10) durch ein Spin-off-Verfahren, eine Schleuder- oder Wirbelbeschichtung, oder eine Spin- oder Düsenbeschichtung aufgebracht wird bzw. werden.

20. Verfahren nach einem der Ansprüche 10 bis 19, **dadurch gekennzeichnet , daß** als Mittel zum Herausarbeiten der Durchgangsöffnung(en) (3) chemisches Naßätzen, Plasmatrockenätzen, Elektroerosion oder thermisches Ausschmelzen angewandt wird.

21. Verfahren nach einem der Ansprüche 10 bis 20, **dadurch gekennzeichnet, daß** alle oder ein Teil der Perforationen (7) mittels Photolithographie in Verbindung mit Trocken- oder Naßätzen oder mittels Laser- oder Teilchenstrahlbearbeitung ausgebildet werden.

22. Verfahren nach einem der Ansprüche 10 bis 21, **dadurch gekennzeichnet, daß** alle Metallfilme (8) oder ein Teil der Metallfilme (8) durch Sputtern, Bedampfen, Plattieren, Galvanisieren oder elektroloses Galvanisieren aufgebracht werden bzw. wird.

23. Verfahren nach einem der Ansprüche 10 bis 22, **dadurch gekennzeichnet, daß** die Membrane (4) als ultradünne Membrane (4) mit einer Dicke im Bereich von 20 µm bis 100 nm hergestellt wird.

24. Anwendung des nach einem der Ansprüche 1 bis 9 ausgebildeten oder nach einem der Ansprüche 10 bis 23 hergestellten Sensor- und/oder Trennelements (1, 12) als Teilelement zur Detektion von elektrochemisch aktiven Molekülen.

25. Anwendung des nach einem der Ansprüche 1 bis 9 ausgebildeten oder nach einem der Ansprüche 10 bis 23 hergestellten Sensor- und/oder Trennelements (1, 12) zur Trennung von Molekülen durch die semipermeable(n) Schicht(en).

## Claims

1. Sensor and/or separation element for the semi-permeable diffusion of molecules, comprising
(a) a mechanically stable substrate (2) which has at least one through-aperture (3);
(b) a perforated membrane (4) which is integral with the substrate and which extends over the through-aperture (3), the material of the membrane (4) being different from the material of the substrate (2) in relation to its processability owing to a predetermined chemical and/or physical processing means in such a way that the substrate (2) can be removed by the processing means, whereas the membrane (4) substantially cannot be acted upon by the processing means; and
(c) at least one semi-permeable layer (10) which is securely attached to one or both side(s) of the membrane (4) at least in the perforated region thereof, in that the semi-permeable layer (10) or the semi-permeable layers is/are fastened mechanically in the adjoining perforations (7) and/or by chemical-structural and/or physical adhesion and/or adhesive intermediate layers and/or covalent surface joining to the adjacent faces of the membrane (4), optionally of the substrate (2) or a metal film (8) applied to the membrane (4) optionally also to one or both sides.

2. Sensor and/or separation element according to claim 1, **characterised in that** the membrane (4) is an ultrathin membrane (4) of which the thickness is in the range of 20 µm to 100 nm.

3. Sensor and/or separation element according to claim 1 or 2, **characterised in that** the semi-permeable layer (10) is a polymer layer, preferably made of an organic, preferably adhesive, polymer.

4. Sensor and/or separation element according to claim 1, 2 or 3, **characterised in that** the membrane (4) consists of mechanically stable membrane-forming inorganic material.

5. Sensor and/or separation element according to claim 4, **characterised in that** the membrane (4) consists of silicon, one or more silicon compounds and/or a silicon-containing material.

6. Sensor and/or separation element according to any of the preceding claims, **characterised in that** the perforations (7) have a diameter or greatest diameter which is in the region of 0.1 to 50 µm, preferably in the range of 1 to 10 µm.

7. Sensor and/or separation element according to any of the preceding claims, **characterised in that** the optional metal film (8) extends over a region of the substrate (2) or over a region of the membrane (4) underlaid by the substrate (2).

8. Sensor and/or separation element according to any one of the preceding claims, **characterised in that** a metal film (8) or a plurality of metal films is/are provided which consist(s) of individual segments separated from one another, each of which is provided with at least one electrical connection (9).

9. Sensor and/or separation element according to any of the preceding claims, **characterised in that** a further metal film or one or more further double layers of metal film plus semi-permeable layer are applied to the exterior of one or both semi-permeable layers (10), a terminating metal film optionally being applied to the outermost semi-permeable layer and all further metal films being perforated in the region of the through-aperture.

10. Method for producing a sensor and/or separation element for the semi-permeable diffusion of molecules, comprising the following process steps:
(a) providing an electrically conductive membrane (4) on a mechanically stable substrate (2) in such a way that the membrane (4) is integral with the substrate (2), the material of the membrane (4) being different from the material of the substrate (2) in relation to its processability owing to a predetermined chemical and/or physical processing means in such a way that the substrate (2) can be removed by the processing means, whereas the membrane (4) substantially cannot be acted upon by the processing means;
(b) working at least one through-aperture (3) from the substrate (2) using the processing means, so the through-aperture (3) is closed at one side by the membrane (4);
(c) forming perforations (7) in the region of the membrane (4) which extend over the through-aperture (3);
(d) firmly adhering attachment of at least one semi-permeable layer (10) to one or both side(s) of at least the region of the membrane (4) spanning the through-aperture (3), preferably also to the adjoining region of the substrate (2) in that the semi-permeable layer (10) or the semi-permeable layers is/are fastened mechanically in the adjoining perforations (7) and/or by chemical-structural and/or physical adhesion and/or adhesive intermediate layers and/or covalent surface joining to the adjacent faces of the membrane (4) and optionally of the substrate (2);
(e) forming one or more electrical connections (9) connected to the membrane (4) or formed thereby.

11. Method for producing a sensor and/or separation element for the semi-permeable diffusion of molecules, comprising the following process steps:
(a) providing an electrically insulating or semi-conductive membrane (4) on a mechanically stable substrate (2) in such a way that the membrane (4) is integral with the substrate (2), the material of the membrane (4) being different from the material of the substrate (2) in relation to its processability owing to a predetermined chemical and/or physical processing means in such a way that the substrate (2) can be removed by this processing means, whereas the membrane (4) substantially cannot be acted upon by the processing means;
(b) Working at least one through-aperture (3) from the substrate (2) using the processing means, so the through-aperture (3) is closed at one side by the membrane (4);
(c) Forming perforations (7) in the region of the membrane (4) which extends over the through-aperture (3);
(d) firmly adhering attachment of at least one semi-permeable layer (10) to one or both side(s) of at least the region of the membrane (4) spanning the through-aperture (3), preferably also to the adjoining region of the substrate (2) in that the semi-permeable layer (10) or the semi-permeable layers is/are fastened mechanically in the adjoining perforations (7) and/or by chemical-structural and/or physical adhesion and/or adhesive intermediate layers and/or covalent surface joining to the adjacent faces of the membrane (4) and optionally of the substrate (2) or of a metal film (8) applied to the membrane (4) optionally also to one or both sides.

12. Method according to claim 11, **characterised in that** one or more electrical connections (9) connected to the respective metal film (8) is/are produced.

13. Method according to claim 10, 11 or 12, **characterised in that** the membrane (4) is produced from mechanically stable membrane-forming inorganic material.

14. Method according to any of the preceding method claims, **characterised in that** the membrane (4) is produced from silicon, one or more silicon compounds and/or a silicon-containing material.

15. Method according to any of claims 10, to 14, **characterised in that** a further metal film or one or more further double layers of metal film plus semi-permeable membrane are applied to the exterior of one or both semi-permeable layers (10), a terminating metal film optionally being applied to the outermost semi-permeable membrane and all further metal films being perforated in the region of the through-aperture.

16. Method according to any of the preceding method claims, **characterised in that** one or more metal films (8) are produced from separate segments, each segment preferably being provided with at least one separate connection (9) or being electrically conductively connected.

17. Method according to any of claims 10 to 16, **characterised in that** at least one semi-permeable layer (10), preferably all semi-permeable layers, is/are formed from polymer, preferably organic, preferably adhesive polymer.

18. Method according to any of claims 10 to 17, **characterised in that** the perforations (7) are produced with a diameter or greatest diameter in the region of 0.1 to 50 µm, preferably in the range of 1 to 10 µm.

19. Method according to any of claims 10 to 18, **characterised in that** the semi-permeable layer(s) (10) is/are applied by a spin-off method, a centrifugal or fluidised bed coating or a spin or nozzle coating.

20. Method according to any of claims 10 to 19, **characterised in that** chemical wet etching, plasma dry etching, electroerosion or thermal melting is used as means for working the through-aperture(s) (3).

21. Method according to any of claims 10 to 20, **characterised in that** all or a portion of the perforations (7) are formed by means of photolithography in conjunction with dry or wet etching or by means of laser or particle beam processing.

22. Method according to any of claims 10 to 21, **characterised in that** all metal films (8) or a portion of the metal films (8) is/are applied by sputtering, vapour deposition, metal coating, electroplating or plating.

23. Method according to any of claims 10 to 22, **characterised in that** the membrane (4) is produced as an ultrathin membrane (4) with the thickness in the range of 20 µm to 100 nm.

24. Use of the sensor and/or separation element (1, 12) formed according to any of claims 1 to 9 or produced according to any of claims 10 to 23 as part element for detecting electrochemically active molecules.

25. Use of the sensor and/or separating element (1, 12) formed according to any of claim 1 to 9 or produced according to any of claims 10 to 23 for separating molecules through the semi-permeable layer(s).

## Revendications

1. Elément de détection et/ou de séparation pour la diffusion semi-perméable de molécules comprenant :
(a) un substrat stable mécaniquement (2) qui présente au moins une ouverture pour le passage (3) ;
(b) une membrane (4) perforée, d'une seule pièce avec le substrat (2), qui s'étend au-dessus de l'ouverture pour le passage (3), le matériau de la membrane (4) étant différent du matériau du substrat (2) au niveau de sa transformabilité par le biais d'un agent de transformation prédéterminé, chimique et/ou physique, de telle manière que le substrat (2) puisse être éliminé par l'agent de transformation, la membrane (4) en revanche pour l'essentiel soit inattaquable par l'agent de transformation ; et
(c) au moins une couche semi-perméable (10), fixée par adhésion à la membrane (4) au moins dans sa zone perforée sur un côté ou des deux côtés, la couche semi-perméable (10) ou les couches semi-perméables étant fixée(s) mécaniquement dans les perforations contiguës (7) et/ou par adhésion de structures chimiques et/ou physique et/ou couches intermédiaires adhésives et/ou liaison de surface covalente aux surfaces contiguës de la membrane (4), éventuellement du substrat (2) ou d'un film métallique (8) déposé sur la membrane (4) en plus au choix d'un côté ou des deux côtés.

2. Elément de détection et/ou de séparation selon la revendication 1, **caractérisé en ce que** la membrane (4) est une membrane ultramince (4) dont l'épaisseur se situe dans une zone allant de 20 µm à 100 nm.

3. Elément de détection et/ou de séparation selon la revendication 1 ou 2, **caractérisé en ce que** la couche semi-perméable (10) est une couche polymère, de préférence issue d'un polymère organique, de préférence susceptible d'adhérer.

4. Elément de détection et/ou de séparation selon la revendication 1, 2 ou 3, **caractérisé en ce que** la membrane (4) se compose d'un matériau inorganique formant une membrane, stable mécaniquement.

5. Elément de détection et/ou de séparation selon la revendication 4, **caractérisé en ce que** la membrane (4) se compose de silicium, d'un ou de plusieurs composés silicium et/ou d'un matériau siliceux.

6. Elément de détection et/ou de séparation selon l'une des revendications précédentes, **caractérisé en ce que** les perforations (7) ont un diamètre ou un diamètre au plus gros qui se situe dans une zone allant de 0,1 à 50 µm, de préférence dans la zone allant de 1 à 10 µm.

7. Elément de détection et/ou de séparation selon l'une des revendications précédentes, **caractérisé en ce que** le film métallique (8) au choix s'étend au-dessus d'une zone du substrat (2) ou au-dessus d'une zone de la membrane (4) soutenue par le substrat (2).

8. Elément de détection et/ou de séparation selon l'une des revendications précédentes, **caractérisé en ce qu'**un film métallique (8) ou plusieurs films métalliques sont prévus, qui se composent de différents segments séparés les uns des autres, chacun de ceux-ci étant doté d'au moins une connexion électrique (9).

9. Elément de détection et/ou de séparation selon l'une des revendications précédentes, **caractérisé en ce que**, sur la face externe d'une ou des deux couches semi-perméables (10), un autre film métallique ou une ou plusieurs autres doubles couches de film métallique et une couche semi-perméable sont déposés, un film métallique terminal étant éventuellement déposé sur la couche semi-perméable supérieure et tous les autres films métalliques étant perforés dans la zone de l'ouverture pour le passage.

10. Procédé de fabrication d'un élément de détection et/ou de séparation pour la diffusion semi-perméable de molécules, comprenant les étapes suivantes du procédé consistant à :
(a) munir un substrat (2) stable mécaniquement d'une membrane (4) conductrice électriquement, de telle manière que la membrane (4) soit d'une seule pièce avec le substrat (2), le matériau de la membrane (4) étant différent du matériau du substrat (2) au niveau de sa transformabilité par le biais d'un agent de transformation prédéterminé chimique et/ou physique, de telle manière que le substrat (2) puisse être éliminé par l'agent de transformation, la membrane (4) en revanche pour l'essentiel soit inattaquable par l'agent de transformation ;
(b) façonner au moins une ouverture de passage (3) dans le substrat (2) par le biais de l'agent de transformation, afin que l'ouverture de passage (3) soit fermée unilatéralement par la membrane (4) ;
(c) former des perforations (7) dans la zone de la membrane (4) qui s'étend au-dessus de l'ouverture de passage ;
(d) appliquer de manière adhésive au moins une couche semi-perméable (10), d'un côté ou des deux côtés, au moins sur la zone de la membrane (4) surplombant l'ouverture de passage (3), de préférence sur la zone du substrat (2) contiguë, la couche semi-perméable (10) ou les couches semi-perméables étant fixée(s) mécaniquement dans les perforations contigués (7) et/ou par adhésion de structures chimiques et/ou physique et/ou couches intermédiaires adhésives et/ou liaison de surface covalente aux surfaces contiguës de la membrane (4) et éventuellement du substrat (2).
(e) former une ou plusieurs connexions (9) électriques reliées à la membrane (4) ou formées par celle-ci.

11. Procédé de fabrication d'un élément de détection et/ou de séparation pour la diffusion semi-perméable de molécules, comprenant les étapes suivantes du procédé consistant à :
(a) munir un substrat (2) stable mécaniquement d'une membrane (4) isolée électriquement ou semi-conductrice, de telle manière que la membrane (4) soit d'une seule pièce avec le substrat (2), le matériau de la membrane (4) étant différent du matériau du substrat (2) au niveau de sa transformabilité par le biais d'un agent de transformation prédéterminé, chimique et/ou physique, de telle manière que le substrat (2) puisse être éliminé par l'agent de transformation, la membrane (4) en revanche pour l'essentiel soit inattaquable par l'agent de transformation ;
(b) former au moins une ouverture de passage (3) dans le substrat (2) par le biais de l'agent de transformation, afin que l'ouverture de passage (3) soit fermée unilatéralement par la membrane (4) ;
(c) former des perforations (7) dans la zone de la membrane (4) qui s'étend au-dessus de l'ouverture de passage (3) ;
(d) appliquer de manière adhésive au moins une couche semi-perméable (10), d'un côté ou des deux côtés, au moins sur la zone de la membrane (4) surplombant l'ouverture de passage (3), de préférence sur la zone du substrat (2) contiguë, la couche semi-perméable (10) ou les couches semi-perméables étant fixée(s) mécaniquement dans les perforations contiguës (7) et/ou par adhésion de structures chimiques et/ou physique et/ou couches intermédiaires adhésives et/ou liaison de surface covalente aux surfaces contiguës de la membrane (4), éventuellement du substrat (2) ou d'un film métallique (8) déposé sur la membrane (4) en plus au choix d'un côté ou des deux côtés.
(e) former une ou plusieurs connexions (9) électriques reliées à la membrane (4) ou formées par celle-ci.

12. Procédé selon la revendication 11, **caractérisé en ce qu'**une ou plusieurs connexions électriques (9), reliées au film métallique (8) respectif, sont fabriquées.

13. Procédé selon la revendication 10, 11 ou 12, **caractérisé en ce que** la membrane (4) se compose d'un matériau inorganique formant une membrane, stable mécaniquement.

14. Procédé selon l'une des revendications précédentes, **caractérisé en ce que** la membrane (4) se compose de silicium, d'un ou de plusieurs composés silicium et/ou d'un matériau siliceux.

15. Procédé selon l'une des revendications 10 à 14, **caractérisé en ce que**, sur la face externe d'une ou des deux couches semi-perméables (10), un autre film métallique ou une ou plusieurs autres doubles couches de film métallique et une membrane semi-perméable sont déposés, un film métallique terminal étant éventuellement déposé sur la membrane semi-perméable supérieure et tous les autres films métalliques étant perforés dans la zone de l'ouverture pour le passage (3).

16. Procédé selon l'une des revendications précédentes, **caractérisé en ce qu'**un ou plusieurs films métalliques (8) sont fabriqués à partir de segments séparés les uns des autres, chaque segment étant de préférence doté d'au moins une connexion (9) propre ou relié par un conducteur électrique.

17. Procédé selon l'une des revendications 10 à 16, **caractérisé en ce qu'**au moins une couche semi-perméable (10), de préférence toutes les couches semi-perméables, est ou sont formée(s) à partir de polymère, de préférence d'un polymère organique, de préférence susceptible d'adhérer.

18. Procédé selon l'une des revendications 10 à 17, **caractérisé en ce que** les perforations (7) ont un diamètre ou un diamètre au plus gros qui se situe dans une zone allant de 0,1 à 50 µm, de préférence dans la zone allant de 1 à 10 µm.

19. Procédé selon l'une des revendications 10 à 18, **caractérisé en ce que** la ou les couches semi-perméables (10) sont déposées par le biais d'un procédé par rotation, d'un dépôt par projection ou par fluidisation ou d'un dépôt par filage ou pulvérisation.

20. Procédé selon l'une des revendications 10 à 19, **caractérisé en ce qu'**on utilise comme agent pour former l'ouverture de passage (3) l'attaque chimique par voie humide, l'attaque au plasma à sec, l'électroérosion ou la fusion thermique.

21. Procédé selon l'une des revendications 10 à 20, **caractérisé en ce que** toutes, ou une partie des perforations (7), sont formées au moyen de la photolithographie en combinaison avec l'attaque par voie humide ou à sec ou au moyen -d'une transformation au rayon laser ou rayon de particules.

22. Procédé selon l'une des revendications 10 à 21, **caractérisé en ce que** tous les films métalliques (8) ou une partie des films métalliques sont déposés par pulvérisation, par métallisation au vide, par plaquage, par galvanisation ou par galvanisation sans électrodes.

23. Procédé selon l'une des revendications 10 à 22, **caractérisé en ce que** la membrane (4) est une membrane ultramince (4) dont l'épaisseur se situe dans une zone allant de 20 µm à 100 nm.

24. Utilisation de l'élément de détection et/ou de séparation (1, 12), formé selon l'une des revendications 1 à 9 ou fabriqué selon l'une des revendications 10 à 23, comme pièce pour la détection de molécules actives électrochimiquement.

25. Utilisation de l'élément de détection et/ou de séparation (1, 12), formé selon l'une des revendications 1 à 9 ou fabriqué selon l'une des revendications 10 à 23, pour la séparation de molécules par le biais de couche(s) semi-perméable(s).
